# EUROPEAN PATENT APPLICATION

(11) **EP 4 714 256 A1**
(43) Date of publication of application: **25.03.2026**
(21) Application number: 24810907.6
(22) Date of filing: 09.05.2024
(51) Int. Cl.: A01G 7/00, G06Q 50/02

(54) **INFORMATION PROCESSING DEVICE, INFORMATION PROCESSING METHOD, AND PROGRAM**

(30) Priority: 19.05.2023 JP 2023083299
(71) Applicant: OMRON Corporation, Kyoto-shi, Kyoto 600-8530 (JP)
(72) Inventor: OGUSHI, Takahiro, Kyoto-shi, Kyoto 600-8530 (JP); SUGIOKA, Masayuki, Kyoto-shi, Kyoto 600-8530 (JP); NARA, Yusuke, Kyoto-shi, Kyoto 600-8530 (JP); KATO, Yutaro, Kyoto-shi, Kyoto 600-8530 (JP); WANG, Ying, Kyoto-shi, Kyoto 600-8530 (JP)
(74) Representative: Marks & Clerk LLP
(86) International application number: PCT/JP2024/017296
(87) International publication number: WO 2024/241899

(57) **Abstract**

An information processing device 200 includes a position acquisition unit 211a configured to acquire first absolute position information indicating a first absolute position of an imaging device 311 configured to capture an image of one or more crops in a specific region of a farm field, an image acquisition unit 211b configured to acquire the image captured by the imaging device 311, an inclination acquisition unit 211c configured to acquire inclination information indicating an inclination of the imaging device measured by a measurement unit 300, an identification unit 212 configured to identify an in-image position in the image of each of the one or more crops displayed on the image based on the image and the inclination information, and an estimation unit 213 configured to estimate a second absolute position of each of the one or more crops displayed on the image based on the first absolute position information and the in-image position.

## Description

### TECHNICAL FIELD

The present invention relates to an information processing device, an information processing method, and a program.

### BACKGROUND OF INVENTION

A technique for identifying a position of a crop cultivated in a farm field is known. For example, Patent Document 1 below discloses an information processing device that acquires a video from an imaging device capturing an image in front of an agricultural vehicle and recognizes a position of a crop in a farm field based on the video.

### CITATION LIST

### PATENT LITERATURE

Patent Document 1: JP 2021-100384 A

### SUMMARY

### TECHNICAL PROBLEM

The above Patent Document 1 can identify the position of each crop in the image. Unfortunately, in a case of, for example, determining the growth state of the crop over a wide range of the farm field, simply utilizing such position information is not enough, and the position of the crop needs to be more accurately identified.

To solve the above problem, an object of the present invention is to provide an information processing device, an information processing method, and a program that can more accurately identify the position of a crop in a farm field.

### SOLUTION TO PROBLEM

An information processing device according to an aspect of the present disclosure includes: a position acquisition unit configured to acquire first absolute position information indicating a first absolute position of an imaging device configured to capture an image of one or more crops in a specific region of a farm field; an image acquisition unit configured to acquire the image captured by the imaging device 311; an inclination acquisition unit configured to acquire inclination information indicating an inclination of the imaging device measured by a measurement unit; an identification unit configured to identify an in-image position in the image of each of the one or more crops displayed on the image based on the image and the inclination information; and an estimation unit configured to estimate a second absolute position of each of the one or more crops displayed on the image based on the first absolute position information and the in-image position.

A method according to another aspect of the present disclosure includes: by a computer, acquiring first absolute position information indicating a first absolute position of an imaging device configured to capture an image of one or more crops in a specific region of a farm field; acquiring the image captured by the imaging device; acquiring inclination information indicating an inclination of the imaging device measured by a measurement unit; identifying an in-image position in the image of each of the one or more crops displayed on the image based on the image and the inclination information; and estimating a second absolute position of each of the one or more crops displayed on the image based on the first absolute position information and the in-image position.

A program according to another aspect of the present disclosure causes a computer to execute: a position acquisition function of acquiring first absolute position information indicating an absolute position of an imaging device configured to capture an image of one or more crops in a specific region of a farm field; an image acquisition function of acquiring the image captured by the imaging device; an inclination acquisition function of acquiring inclination information indicating an inclination of the imaging device measured by a measurement unit; an identification function of identifying an in-image position in the image of each of the one or more crops displayed on the image based on the image and the inclination information; and an estimation function of estimating a second absolute position of each of the one or more crops displayed on the image based on the first absolute position information and the in-image position.

### ADVANTAGEOUS EFFECTS OF INVENTION

The present invention can provide an information processing device, an information processing method, and a program that can more accurately identify the position of a crop in a farm field.

### BRIEF DESCRIPTION OF THE DRAWINGS

FIG. 1 is a diagram schematically illustrating a smart agriculture system according to the present embodiment.
FIG. 2 is a conceptual diagram illustrating a farm field of view of a step surface S in a farm field illustrated in FIG. 1 in more detail.
FIG. 3 is a schematic view illustrating an example of a method of imaging by an imaging device according to the present embodiment.
FIG. 4 is a schematic view illustrating an example of a method of image capturing by the imaging device according to the present embodiment.
FIG. 5 is a schematic view illustrating an example of a method of image capturing and a method of position identification of a crop by the imaging device according to the present embodiment.
FIG. 6 is a schematic view illustrating an example of a method of image capturing and a method of position identification of a crop by the imaging device according to the present embodiment.
FIG. 7 is a schematic view illustrating an example of a method of image capturing and a method of position identification of a crop by the imaging device according to the present embodiment.
FIG. 8 is a diagram illustrating an example of a functional configuration of an information processing device according to the present embodiment.
FIG. 9 is a diagram illustrating an operation example of the information processing device according to the present embodiment.
FIG. 10 is a diagram illustrating an example of a hardware configuration of the information processing device according to the present embodiment.

### DESCRIPTION OF EMBODIMENTS

Hereinafter, an embodiment of the present invention (hereinafter, referred to as "the present embodiment") will be described in detail with reference to the drawings as necessary, but the present invention is not limited thereto, and various variations can be made without departing from the gist thereof. In the drawings, the same elements are denoted by the same reference numerals, and redundant description will be omitted. A positional relationship such as up, down, left, and right is based on a positional relationship illustrated in the drawings unless otherwise specified. Further, dimensional ratios in the drawings are not limited to ratios illustrated in the drawings.

### 1. System

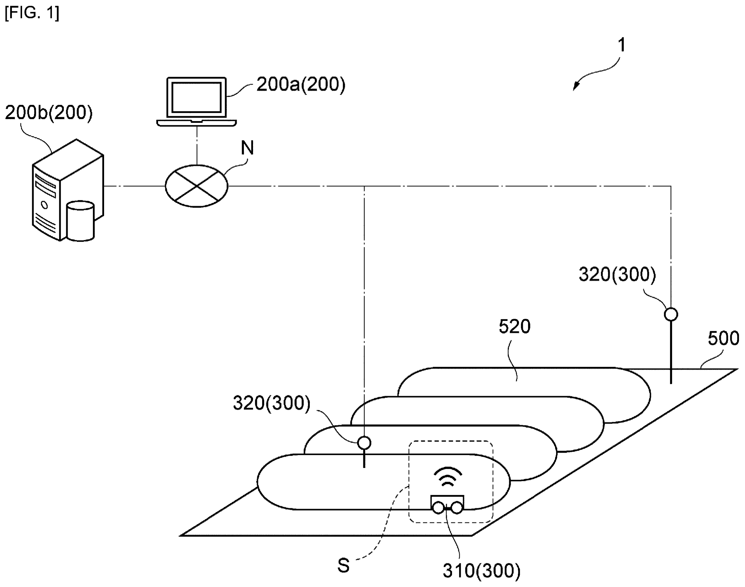

FIG. 1 is a diagram schematically illustrating a smart agriculture system 1 according to an embodiment of the present invention. As illustrated in FIG. 1, the smart agriculture system 1 includes an information processing device 200 and a measurement device 300. The measurement device 300 may be various sensors such as a mobile sensor 310, a fixed sensor 320, and/or the like for example. The information processing device 200 may be a terminal device 200a, a server device 200b, and/or the like. The information processing device 200 and the measurement device 300 may be connected via a network N.

In the smart agriculture system 1, an image of crops in a farm field (hereinafter, also simply referred to as "image") is acquired by using various sensors such as the fixed sensor 320 and the mobile sensor 310. Then, the information processing device 200 (for example, the server device 200b) accumulates the acquired images. The information processing device 200 (for example, the terminal device 200a) identifies a position of a crop and calculates the number of crops based on the image of the crops. The crops may be, for example, fruits cultivated by trellising, such as grapes, kiwifruits, or pears. The crops may also be, specifically, flowers or fruits of fruits or the like. As another example, the crops may be vegetables, such as tomatoes, eggplants, or paprika.

### Information processing device

The information processing device 200 may be a terminal device such as a laptop or a smartphone, or a server device such as a storage server. The information processing device 200 executes a predetermined program to connect to the measurement device 300 and transmit and receive various types of data, store the various types of data received, output the various types of data to the user, and accept an instruction from the user to the measurement device 300 or the like through voice input, operation input, or the like.

The server device 200b may be a cloud server or may be an edge server. The edge server may be installed in the farm field or around the farm field to perform data processing and analysis. Accordingly, since the data is not transmitted to the cloud server and the processing is executed on the edge server side, a delay in communication is less likely to occur, and the processing load can be distributed. For example, the server device 200b as an edge server may collect images of crops from the measurement device 300, and a group of the collected images may be accumulated in the server device 200b, which is a cloud server. Then, the terminal device 200a may acquire the accumulated images and calculate the number of the crops. The terminal device 200a having the same function as the edge server may be provided instead of the edge server.

### Measurement device

The measurement device 300 measures the crops and the like in the farm field and the surrounding environment, generates data indicating the result of the measurement (hereinafter, also referred to as "measurement data"), and transmits the data to the information processing device 200 and the like. The measurement device 300 is not particularly limited, and may be, for example, a device including various sensors provided at any position in the farm field, a drone including various sensors and flying in the farm field, an unmanned vehicle (hereinafter, also referred to as "mobile robot") that can travel in the farm field, a smartphone including various sensors, a handheld computer device, or a terminal operated by a person such as a wearable terminal. Here, examples of the sensor which is not particularly limited include an image sensor, a sensor that measures the position of the measurement device 300 (hereinafter, also referred to as a "position sensor"), a sensor that measures the inclination of the measurement device 300 (hereinafter, also referred to as an "inclination sensor"), a distance measurement sensor that measures the distance between the measurement device 300 and the crop (hereinafter, also referred to as a "first distance"), and/or an environment sensor.

The image sensor is one aspect of an imaging device. The image sensor is not particularly limited as long as the image sensor is a sensor capable of capturing a still image or a moving image. The image sensor may be, for example, a fixed-point camera installed in a farm field, a camera of a terminal such as a wearable device, or a camera installed in a mobile measurement device 300. The image sensor may be, for example, configured to capture time-series images (for example, moving image) by continuously generating images in units of frames. The image sensor may be, for example, a depth camera having a distance measurement function.

The position sensor may be a GPS receiving antenna or the like for measuring position information (for example, first absolute position information indicating latitude and longitude) of the measurement device 300.

The inclination sensor is one mode of a measurement unit that measures the inclination of the imaging device. The inclination sensor may be, for example, a gyro sensor, an acceleration sensor, or a gravity sensor.

The environment sensor is a sensor for measuring environmental information in the farm field of crops 520. The environment sensor is not particularly limited, and examples thereof may include a weather sensor, a soil sensor, a gas sensor, and the like.

The mobile sensor 310 may be, for example, an unmanned vehicle that travels in a farm field and is equipped with various sensors. The unmanned vehicle is one aspect of a moving object. The mounted sensor may be, for example, one or more image sensors for capturing an image of the crop, one or more position sensors, and/or one or more inclination sensors.

The fixed sensor 320 may be equipped with a fixed-point camera, for example. The fixed sensor 320 may be a mark of a position when the mobile sensor 310 moves and may be, for example, a sensor-based sign using a Bluetooth beacon. The mobile sensor 310 may receive the beacon and identify its position in a coordinate system of a specific region in the farm field. The specific region is a region in the farm field where the absolute position of the crop is identified, and may be, for example, the entirety of the farm field, one or more sections among a plurality of sections in the farm field, or may be a region per unit area.

### Network

The network N is configured by a wireless network or a wired network. Examples of the network include a mobile phone network, a personal handy-phone system (PHS) network, a wireless local area network (Communication conforming to Local Area Network, IEEE802.11 (so-called WI/Fi (registered trademark)) is included.), 3rd generation (3G), long term evolution (LTE), 4th generation (4G), 5th generation (5G), WiMAX (registered trademark), infrared communication, visible light communication, Bluetooth (registered trademark), a wired LAN, a telephone line, a power line communication network, and a network conforming to IEEE1394 or the like.

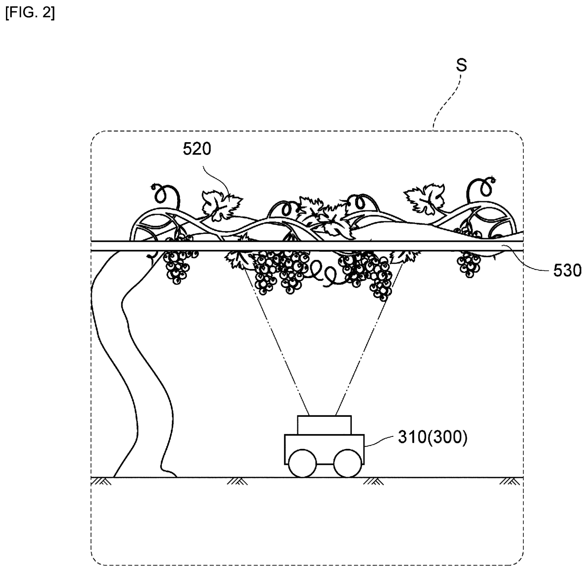

FIG. 2 is a conceptual diagram illustrating a farm field of view of a step surface S in a farm field illustrated in FIG. 1 in more detail. As illustrated in FIG. 2, a crop with fruit at ends of tree branches is disclosed, and a trellis 530 that supports the branches is installed under the branches. Here, the mobile sensor 310 may capture an image of the crop while traveling under the branches and the trellis 530, with the sensor directed approximately upward relative to the ground.

In the smart agriculture system 1, for example, a plurality of imaging devices installed in the mobile sensor 310 or the like capture images of the crop cultivated in the specific region, the position of the crop in the captured image (hereinafter, also referred to as "in-image position") is identified, and the absolute position of the crop (hereinafter, also referred to as "second absolute position") is estimated based on the absolute position of the imaging device (hereinafter, also referred to as "first absolute position") and the in-image position of the crop. The absolute position may be, for example, a position in a geodetic system indicated by latitude and longitude coordinates, a position in a plane rectangular coordinate system, or a position indicated by another specific coordinate system (for example, a coordinate system in the specific region).

### 2. Overview of image capturing and overlapping region identification

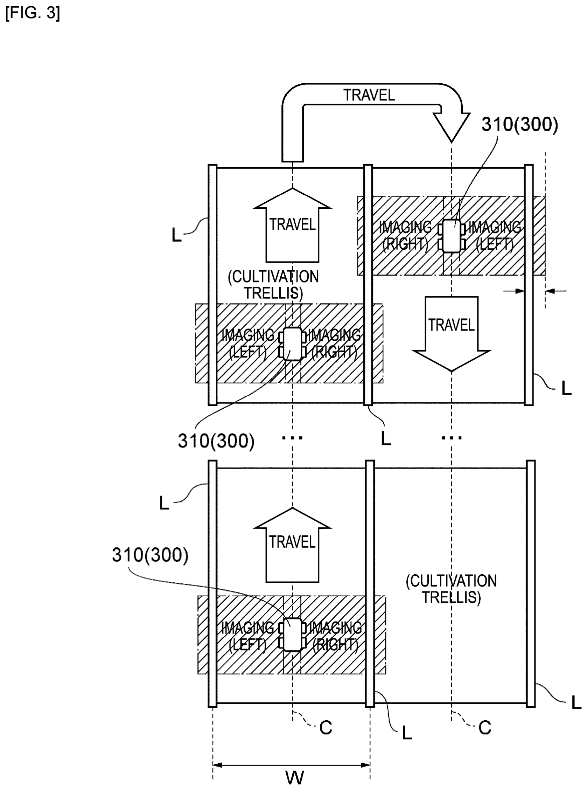

An example of image capturing and crop position identification processing using the mobile sensor 310 will be described with reference to FIGS. 3 to 7. In this example, an example of using an image sensor on the left side (hereinafter, also referred to as a "left image sensor") 311a and an image sensor on the right side (hereinafter, also referred to as a "right image sensor") 311b disposed in parallel to each other will be described. The left image sensor 311a and the right image sensor 311b are respective aspects of a first imaging device and a second imaging device. The left image sensor 311a and the right image sensor 311b capture images of the crop cultivated on the trellis 530, for example, with the upward direction with respect to the ground being the image capturing direction. The left image sensor 311a and the right image sensor 311b are also collectively referred to as "image sensor 311" in a case where there is no particular need for distinction therebetween or the like, for example.

### 2-1. Image capturing

FIG. 3 is a schematic view illustrating a state in which the mobile sensor 310 travels in the specific region of a farm field as viewed from above. As illustrated in FIG. 3, the trellis 530 includes poles arrayed at an interval of a width W (for example, 4 to 5 m). The mobile sensor 310 travels near a center line C of a traveling path that is a region between rows L of the poles. The mobile sensor 310 has the left image sensor 311a and the right image sensor 311b mounted in the left-right direction to capture images of regions in the left-right direction. The left-right direction is a direction substantially orthogonal to the traveling direction of the mobile sensor 310 (the longitudinal direction in the region between the rows of the poles). For example, after traveling from one end to the other end of the traveling path in the longitudinal direction, the mobile sensor 310 turns back and travels from one end to the other end of the adjacent traveling path in the longitudinal direction in the direction opposite to the previous direction. The left image sensor 311a and the right image sensor 311b may be set so that respective imaging ranges overlap each other to avoid, for example, omission of imaging of crops. The mobile sensor 310 may be set so that when capturing images in two adjacent traveling paths, the respective imaging ranges overlap each other to avoid, for example, omission of imaging of crops.

### 2-2. Shift of imaging range due to inclination of image sensor

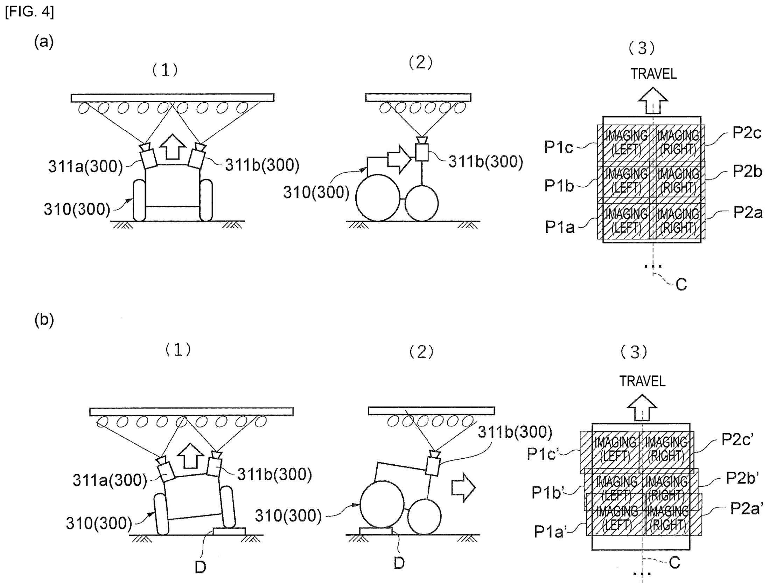

FIG. 4 is a schematic view illustrating a state in which the mobile sensor 310 captures an image while moving. FIG. 4(a) illustrates a state of normal traveling, and FIG. 4(b) illustrates a state in which the mobile sensor 310 is inclined due to an obstacle D while traveling. An image on the left side relative to the traveling direction (hereinafter, also referred to as "left image") P1 captured by the left image sensor 311a and an image on the right side relative to the traveling direction (hereinafter, also referred to as "right image") P2 captured by the right image sensor 311b may include a region where the same crop and the like are redundantly captured. Each of the left image P1 and the right image P2 may be time-series images captured while the vehicle is traveling, and there may be a region in which the same crop or the like is redundantly captured between adjacent images in the time-series images.

In FIG. 4(a), (1) is a back view of the mobile sensor 310, (2) is a side view of the mobile sensor 310, and (3) is a top view of respective imaging ranges for the left image sensor 311a and the right image sensor 311b. As illustrated in FIG. 4(a), the left image sensor 311a and the right image sensor 311b capture images of the crops at ends of branches of trees along the traveling path from left and right sides of the imaging ranges, respectively. In a normal case, as illustrated in (3), left images P1a, P1b, and P1c in time series and right images P2a, P2b, and P2c in time series can each be captured without the respective imaging ranges shifted in the traveling direction or the left-right direction.

FIG. 4(b) illustrates a state where the mobile sensor 310 and the image sensor 311 are inclined by the obstacle D, which corresponds to (1) to (3) in FIG. 4(a). As illustrated in FIG. 4(b) and similar to FIG. 4(a), the left image sensor 311a and the right image sensor 311b capture images of the crops at ends of branches of trees along the traveling path from left and right sides of the imaging ranges, respectively. Due to the inclination caused by the obstacle D, as illustrated in (3), left images P1a', P1b', and P1c' in time series and right images P2a', P2b', and P2c' in time series may be captured with the respective imaging ranges shifted with respect to the traveling direction or the left-right direction. Regarding the shifting of the imaging range thus caused by the inclination due to the obstacle or an unevenness of a road surface of the traveling path, in the smart farming system 1, estimating the second absolute position of each of one or more crops in consideration of the inclination can more accurately identify the position of the crop in the farm field.

### 2-3. Estimation of absolute position

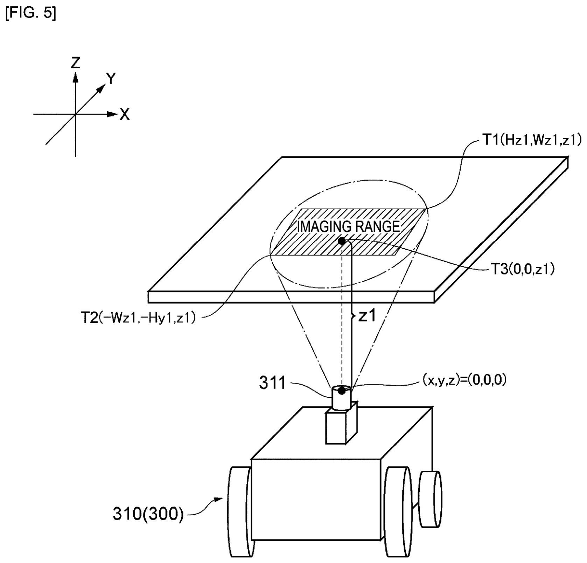

FIGS. 5 to 7 are schematic views illustrating an example of a method of identifying a position of a crop in an image captured by the mobile sensor 310. In this example, for the sake of simplicity, an example in which the number of image sensors 311 is one will be described. In the coordinate system used in the examples of FIGS. 5 to 7, the directions of the X axis and the Y axis are respectively defined as the traveling direction and the left-right direction, the direction of the Z axis is defined as the height direction, and the values of the coordinates in the coordinate system are expressed as (the value of the x coordinate, the value of the y coordinate, the value of the z coordinate). The unit is meter (m).

FIG. 5 is a schematic view illustrating an overview of the mobile sensor 310. As illustrated in FIG. 5, with the center coordinates of the lens of the image sensor 311 defined as (0, 0, 0) and the distance from the image sensor 311 to the crop as the image capturing target (i.e., the working distance) defined as z1, the center coordinates of the imaging range of the image sensor 311 can be expressed as (0, 0, z1). Then, the imaging range of the image sensor 311 can be calculated with the X-axis direction width defined as 2Wz1 (m) and the Y-axis direction depth defined as 2Hz1 (m). For example, the value W may be a value based on the horizontal angle of view of the image sensor 311 (for example, tan(θ₁/2), where θ₁ is the horizontal angle of view), and the value of H may be a value based on the vertical angle of view of the image sensor 311 (for example, tan (θ₂/2), where θ₂ is the vertical angle of view). This allows the information processing device 200 to know the values of the XY coordinates corresponding to the width and the depth of the imaging range of the image sensor 311, allowing the position of each of one or more crops in the imaging range, that is, the in-image position to be identified by using the values of the XY coordinates. Further, if the first absolute position of the information processing device 200 can be identified, the second absolute position of the crop can be estimated from the in-image position identified.

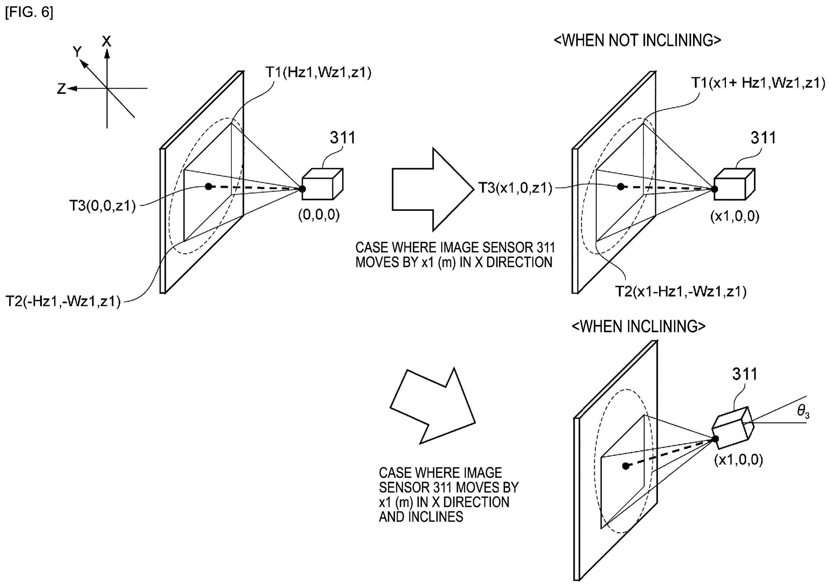

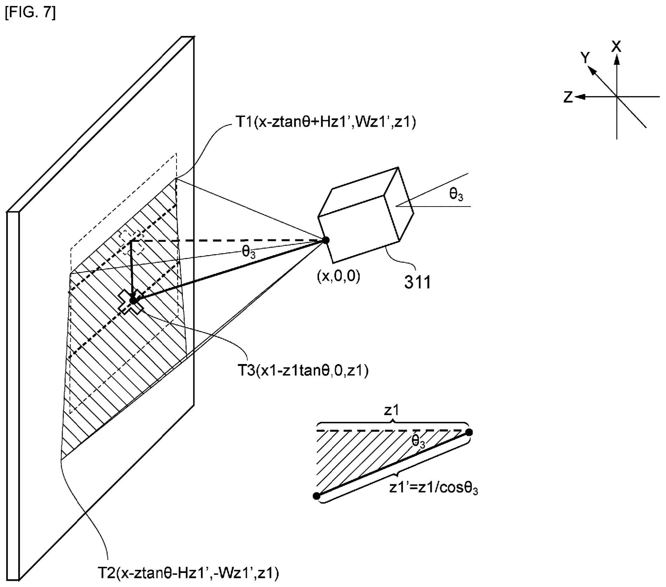

FIGS. 6 and 7 are schematic views illustrating a relationship between the movement of the image sensor 311 and the imaging range in the mobile sensor 310 of FIG. 5. In this example, an example in which the image sensor 311 moves by x1 (m) in the X-axis direction will be described.

As illustrated in FIG. 6, before the image sensor 311 is moved, the coordinates of a vertex T1 of the imaging range are defined as (Hz1, Wz1, z1), the coordinates of the vertex T2 are defined as (-Hz1, -Wz1, z1), the coordinates of a center point T3 are defined as (0, 0, z1), and the center coordinates of the lens of the image sensor 311 are defined as (0, 0, 0).

After the image sensor 311 is moved, when the image sensor 311 is not inclined, the coordinates of the vertex T1 are (x1 + Hz1, Wz1, z1), the coordinates of the vertex T2 are (x1 - Hz1, -Wz1, z1), the coordinates of the center point T3 are (x1, 0, z1), and the center coordinates of the lens of the image sensor 311 are (x1, 0, 0). On the other hand, when the image sensor 311 moves and is inclined by an angle θ₃, the imaging range is shifted, and thus it is necessary to identify the position of the crop in consideration of the shifting.

FIG. 7 is an enlarged view illustrating a case where the image sensor 311 illustrated in FIG. 6 has moved and inclined. As illustrated in FIG. 7, the coordinates of the center point T3 of the imaging range are (x1 - z1tanθ₃, 0, z1). Due to the inclination, the distance between the image sensor 311 and the crop as the image capturing target is z1' = z1/cosθ₃. A width 2Wz1' in the X-axis direction and a depth 2Hz1' in the Y-axis direction of the imaging range as a result of the inclination can be calculated by using the angle θ₃ of the inclination by, for example, a trapezoidal correction technique. In this case, the coordinates of the vertex T1 are (x1 - ztanθ₃ + Hz1', Wz1', z1) and the coordinates of the vertex T2 are (x1 - ztanθ₃ - Hz1', -Wz1', z1). Thus, the information processing device 200 can recognize the shape of the imaging range of the image sensor 311 and the values of the XY coordinates corresponding to the width and the depth of the imaging range, after the inclination of the image sensor 311. Therefore, the position of each of one or more crops in the imaging range, that is, the in-image position can be identified by the values of the XY coordinates in consideration of the inclination.

With the above configuration, in the smart agriculture system 1, when the image sensor 311 is inclined, the in-image position of the crop can be corrected in consideration of the inclination. Therefore, the position (the in-image position and the second absolute position) of the crop in the farm field can be more accurately identified.

### 3. Functional configuration

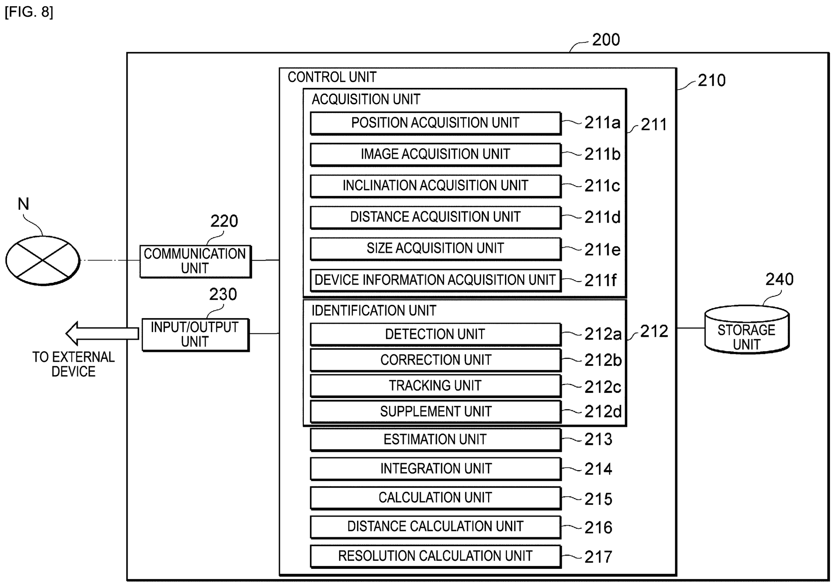

With reference to FIG. 8, a functional configuration of the information processing device 200 according to the present embodiment will be described. As illustrated in FIG. 8, the information processing device 200 includes a control unit 210, a communication unit 220, an input/output unit 230, and a storage unit 240.

### Control unit

The control unit 210 includes an acquisition unit 211, an identification unit 212, and an estimation unit 213. The control unit 210 may further include, for example, an integration unit 214, a calculation unit 215, a distance calculation unit 216, and/or a resolution calculation unit 217.

### Acquisition unit

The acquisition unit 211 acquires various types of data from the measurement device 300, another information processing device 200, the storage unit 240, or the like. The acquisition unit 211 may store the acquired various types of data in the storage unit 240.

The acquisition unit 211 includes a position acquisition unit 211a. The position acquisition unit 211a acquires first absolute position information indicating an absolute position of an imaging device that captures an image of one or more crops in a specific region of a farm field. Specifically, the position acquisition unit 211a may receive the first absolute position information from the position sensor or another information processing device 200 via the communication unit 220. The first absolute position information is one of measurement data pieces and may include (or be associated with) date and time information at the point when the position is measured.

The acquisition unit 211 includes an image acquisition unit 211b. The image acquisition unit 211b acquires an image captured by the image sensor 311. The image acquisition unit 211b may acquire a plurality of images captured by, for example, each of one or more image sensors 311 in the specific region of the farm field and including one or more crops. Specifically, the image acquisition unit 211b may receive data indicating an image including the crop (hereinafter, also referred to as "image data") from the image sensor or another information processing device 200 via the communication unit 220. The image data is one of measurement data pieces, and may include (or may be associated with), for example, date and time information, position information, and/or the like at the point when the image is captured.

The acquisition unit 211 includes an inclination acquisition unit 211c. The inclination acquisition unit 211c acquires inclination information indicating the inclination of the image sensor 311 measured by an inclination sensor that measures the inclination of the image sensor 311. The inclination information may include an angle of inclination of the image sensor 311 for example. Specifically, the inclination acquisition unit 211c may receive the inclination information from the inclination sensor or another information processing device 200 via the communication unit 220. The inclination information is one of measurement data pieces, and may include (or may be associated with), for example, date and time information and/or position information when the inclination is measured.

The acquisition unit 211 may include a distance acquisition unit 211d for example. The distance acquisition unit 211d acquires distance information indicating a distance between the image sensor 311 and one or more crops. Possible examples of the distance indicated by the distance information include, for example, (a) a distance measured by a distance measurement sensor, (b) a distance calculated by the distance calculation unit 216 described below, and (c) a distance set in a fixed manner.

The acquisition unit 211 may include a size acquisition unit 211e for example. The size acquisition unit 211e acquires, for example, size information indicating the size of the crop. The size of the crop indicated by the size information may be, for example, a fixed value, a statistical value of sizes respectively measured for a plurality of crops, or a size detected by a detection unit 212a for each of one or more crops.

The acquisition unit 211 may include a device information acquisition unit 211f for example. The device information acquisition unit 211f may acquire, for example, information on the measurement device 300 (hereinafter, also referred to as "device information"). In a case where the measurement device 300 is the image sensor 311, the device information may include, for example, the angle of view (horizontal angle of view and vertical angle of view), focal length, and/or the number of pixels of the image sensor 311.

### Identification unit

The identification unit 212 identifies, based on the image acquired by the image acquisition unit 211b, an in-image position in the image of each of one or more crops displayed on the acquired image. Specifically, the identification unit 212 identifies the position, in the image, of the crop detected in the image.

The identification unit 212 may identify the in-image position of each of one or more crops in the image further based on the inclination information acquired by the inclination acquisition unit 211c, for example. Possible examples of the method of identifying the in-image position of the crop using the inclination information by the identification unit 212 include (a) identifying the position of each of one or more crops in the image and then correcting each of the identified positions and (b) correcting the position of the coordinates (for example, the coordinates of the vertex T1, the T2, or the center point T3 of the imaging range) of the position serving as a reference in the image (hereinafter, also referred to as an "in-image reference position") and then identifying the position of each of one or more crops. In the above (b), the identification unit 212 may correct the in-image reference position before the detection unit 212a described below performs detection in the image of the crop.

The identification unit 212 may include, for example, the detection unit 212a. The detection unit 212a detects one or more crops included in the image acquired by the acquisition unit 211 by using an image processing technique such as machine learning, deep learning, or pattern recognition. For example, at the time of detection, the detection unit 212a may identify information such as the size, color, shape, or in-image position of each of the one or more crops (hereinafter, these are also collectively referred to as "crop attribute information"). The detection unit 212a may, for example, provide identification information for identifying each of the one or more crops to each of the one or more detected crops, and store the identification information, the crop attribute information, the date and time information and/or the position information in the image data, and other measurement data in the storage unit 240 in association with each other. The crop attribute information may include, for example, the second absolute position of the crop estimated by the estimation unit 213 described below.

For example, when detecting a crop or the like, the detection unit 212a may determine whether the crop detected is incomplete (or complete). The incomplete crop may be, for example, a crop that is not included in a complete state, in a region of an image that is the detection target. Specifically, the detection unit 212a may determine a crop in a state of having a part thereof missing due to a boundary between a plurality of regions or an end of a region, as a crop not included in a complete state in the region. The detection unit 212a may associate information indicating a result of the determination on whether the crop is incomplete with each of the one or more crops detected.

When the plurality of images acquired by the acquisition unit 211 are time-series images captured by the image sensor, the detection unit 212a may detect each of one or more crops in each of the time-series images, for example.

When the plurality of images acquired by the acquisition unit 211 are time-series images captured by the image sensor, the detection unit 212a may detect each of one or more crops in each of the time-series images, for example.

The identification unit 212 may include a correction unit 212b. The correction unit 212b corrects the in-image position or the in-image reference position of the crop based on the inclination information acquired by the inclination acquisition unit 211c. Specifically, the correction unit 212b may correct the in-image position or the in-image reference position so that the first absolute position of the image sensor 311 and an angle of the image sensor 311 with respect to the crop are the same conditions of an image calibrated before the image capturing. In a case where the image sensor 311 is mounted on the mobile sensor 310 and captures an image while moving, the correction unit 212b may correct the in-image position or the in-image reference position to achieve the same condition as an image calibrated before the start of the movement.

For example, as illustrated in the examples of FIGS. 6 and 7, the correction unit 212b may correct the in-image position of the crop based on the angle of the inclination of the image sensor 311 and the distance indicated in the distance information. Such a configuration allows, even when the image sensor 311 is inclined from the angle at the time of calibration, the position of the crop to be accurately identified by the angle of inclination and the distance to the crop.

The identification unit 212 may include, for example, a tracking unit 212c. The tracking unit 212c tracks each of one or more detected crops between images adjacent in time series.

The tracking unit 212c may track each of one or more crops, for example, further based on the result of supplement by a supplement unit 212d. Such a configuration can continuously track the crop by supplement even when the crop to be tracked is hidden by leaves or the like fails to be detected during the tracking.

The identification unit 212 may include, for example, the supplement unit 212d. The supplement unit 212d supplements the crop that is not detected by the detection unit 212a between the images adjacent in time series based on a displacement of the image sensor 311. Specifically, the supplement unit 212d may predict the position of each of one or more crops in the image after t seconds based on the displacement of the image sensor 311 over t seconds, and supplements the undetected crop based on the result of the prediction.

### Estimation unit

The estimation unit 213 estimates the second absolute position of each of one or more crops displayed on the image based on the first absolute position information and the in-image position of the crop identified by the identification unit 212 and/or the in-image position of the crop corrected by the correction unit 212b. Specifically, in a case where the absolute position is a position (for example, latitude and longitude) indicated by coordinates of a geodetic system, the estimation unit 213 may convert the coordinates of the in-image position of the crop into the coordinates of the geodetic system to estimate the second absolute position of the crop.

The above configuration allows the estimation unit 213 to estimate the absolute position of the crop. When the image sensor 311 is inclined, the estimation unit 213 can estimate the absolute position of the crop based on the in-image position of the crop corrected in consideration of the inclination. Therefore, the position of the crop in the farm field can be more accurately identified.

### Integration unit

When there are a plurality of images, the integration unit 214 integrates the crops displayed on a different image of the images based on the second absolute position of each of the crops displayed on the plurality of images. Specifically, the integration unit 214 may identify, as the same crop, a plurality of crops, of the crops detected by the detection unit 212a, with the second absolute positions in a predetermined range, in other words, the second absolute positions at a distance not exceeding a threshold value.

In addition, for example, the integration unit 214 may provide identification information for identifying each of the crops integrated, and store in the storage unit 240, the identification information, the second absolute position of the crop, the crop attribute information (including the size information indicating the size of the crop), date and time information and/or position information as well as other measurement data included in the image data, in association with each other. Possible examples of each information associated with the identification information include (a) individual information of each of the crops to be integrated, (b) a statistical value (such as a maximum value or average value for example) of information of the crops to be integrated, and (c) both (a) and (b). Specifically, the integration unit 214 may associate at least one of (a) size information of a crop A1, (b) size information of a crop A2, and (c) information indicating an average value of the size of the crop A1 and the size of the crop A2, with the identification information of a crop A3 obtained by integrating the crop A1 and the crop A2. Such a configuration allows the second absolute position, the size, and the like to be managed for each crop cultivated in the farm field.

### Calculation unit

The calculation unit 215 calculates the number of crops in the farm field. For example, in a case where there are a plurality of calculation target regions or the like, the calculation unit 215 may calculate a statistical value of the crops in the farm field as the calculation for the number of crops. The statistical value may be, for example, a total value, an average value, a median value, a maximum value, a minimum value, a mode value, or the like of the number of crops. The calculation unit 215 may store count information indicating the calculation result in the storage unit 240 in association with the measurement data.

The calculation unit 215 calculates the number of one or more crops in the specific region of the farm field based on, for example, the second absolute position of the crop estimated by the estimation unit 213. Specifically, the calculation unit 215 may identify the crop for each second absolute position and calculate the number of the identified crops. Such a configuration can avoid redundant counting and accurately calculate the number of crops even if there are crops that are redundantly captured in a plurality of images.

The calculation unit 215 may calculate the number of one or more crops in the specific region of the farm field based on, for example, the result of the integration by the integration unit 214.

### Distance calculation unit

The distance calculation unit 216 calculates the first distance between each of one or more crops and the image sensor 311 based on the size information and the image. The distance calculation unit 216 may calculate, for example, a ratio of an image region corresponding to the crop to the entire region of the image, and calculate the distance between the crop and the image sensor 311 from the ratio and the focal length of the image sensor 311 based on the device information of the image sensor 311. Such a configuration can calculate the distance without information obtained by measuring the distance between the image sensor 311 and the crop with a distance measurement sensor or the like and thus estimate and correct the second absolute position of the crop.

### Resolution calculation unit

The resolution calculation unit 217 calculates the resolution of the image based on the distance calculated by the distance calculation unit 216 (or the distance indicated by the distance information) and the device information. Specifically, the resolution calculation unit 217 may calculate the resolution of the image based on the imaging range of the image, the number of pixels, and the first distance. The resolution calculation unit 217 may calculate the resolution of the image further based on the focal length of the image sensor 311. Such a configuration can accurately measure the size or the like of the crop in the image based on the resolution of each image.

### Communication unit

The communication unit 220 transmits and receives various types of data such as the measurement data to and from the measurement device 300 and/or the other information processing device 200 via the network N.

### Input/output unit

The input/output unit 230 transmits and receives the measurement data and the like to and from an external device such as a display device or an external storage device.

### Storage unit

The storage unit 240 stores the identification information of the crop, the crop attribute information, the count information, the measurement data, and/or the like in association with each other. The storage unit 240 may store each data by using a database management system (DBMS) or may store each information by using a file system. When the DBMS is used, the storage unit 240 may provide a table for each data and manage such pieces of data by associating the tables with each other.

### 4. Operation example

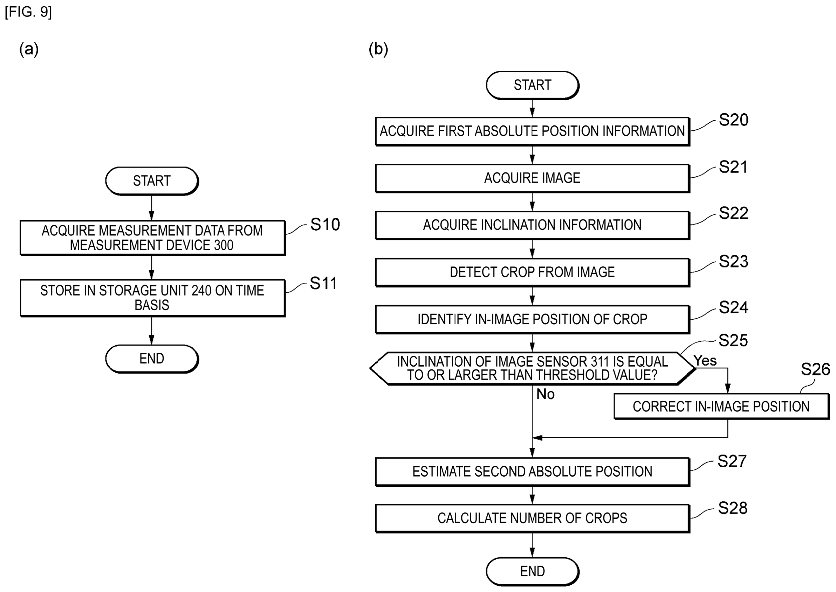

With reference to FIG. 9, an operation example of the information processing device 200 will be described. The order of the processes described below is an example, and may be changed as appropriate.

FIG. 9(a) is a flowchart illustrating a flow of processing of acquiring measurement data in the information processing device 200. As illustrated in FIG. 9(a), the acquisition unit 211 of the information processing device 200 acquires the measurement data from the measurement device 300 or another information processing device 200 (step S10). The acquisition unit 211 stores the acquired measurement data in the storage unit 240 on a time basis (step S11).

FIG. 9(b) is a flowchart illustrating a flow of second absolute position estimation processing and calculation processing for the crop in the information processing device 200. As illustrated in FIG. 9(b), the position acquisition unit 211a of the information processing device 200 acquires, from the storage unit 240, the first absolute position information indicating the first absolute position of the image sensor 311 that captures an image of one or more crops (step S20). The image acquisition unit 211b acquires an image captured by the image sensor 311 from the storage unit 240 (step S21). The inclination acquisition unit 211c acquires inclination information indicating the inclination of the image sensor 311 measured by an inclination sensor (step S22).

The detection unit 212a detects each of one or more crops in each of the plurality of acquired images (step S23). The identification unit 212 identifies the in-image position of each of one or more crops displayed on the image based on the result of the detection (step S24).

When the inclination of the image sensor 311 indicated in the inclination information is equal to or larger than the threshold value (YES in step S25), the correction unit 212b corrects the in-image position based on the inclination information (step S26). The estimation unit 213 estimates the second absolute position of each of one or more crops displayed on the image based on the first absolute position information and the in-image position of the crop (step S27). The calculation unit 215 calculates the number of one or more crops in the specific region of the farm field based on the second absolute position (step S28).

The processing in step S25 and step S26 may be executed before step 23. In this case, in the processing in step 26, the correction unit 212b may correct the in-image reference position instead of the in-image position.

### 5. Hardware configuration

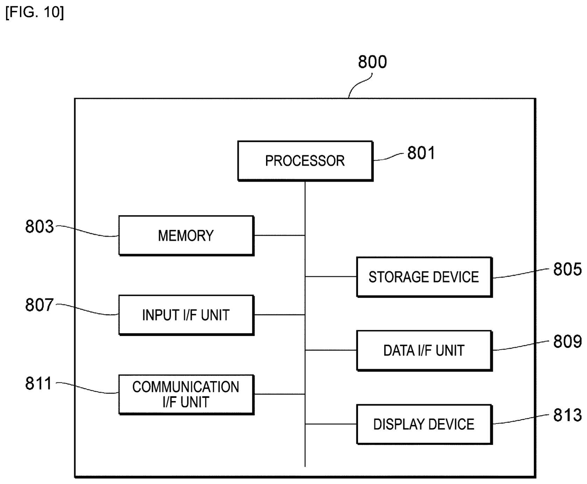

With reference to FIG. 10, an example of a hardware configuration of the information processing device 200 described above implemented by a computer 800 will be described. The functions of the respective devices may be implemented in cooperation by a plurality of devices.

As illustrated in FIG. 10, the computer 800 includes a processor 801, a memory 803, a storage device 805, an input I/F unit 807, a data I/F unit 809, a communication I/F unit 811, and a display device 813.

The processor 801 controls various types of processing in the computer 800 by executing a program stored in the memory 803. For example, the functional units and the like included in the control unit 210 of the information processing device 200 can be implemented by the processor 801 executing a program temporarily stored in the memory 803.

The memory 803 is a storage medium such as a random-access memory (RAM), for example. The memory 803 temporarily stores a program code of a program executed by the processor 801 or data necessary for executing the program.

The storage device 805 is a nonvolatile storage medium such as a hard disk drive (HDD) or a flash memory for example. The storage device 805 stores an operating system or various programs for implementing the above-described configurations. In addition, the storage device 805 can store a table for registering the measurement data, the crop attribute information, and the like, and a DB for managing the table. Such a program or data is loaded onto the memory 803 as necessary, to be referred to by the processor 801.

The input I/F unit 807 is a device for accepting an input from a user. Specific examples of the input I/F unit 807 include a keyboard, a mouse, a touch panel, various sensors, a wearable device, and the like. The input I/F unit 807 may be connected to the computer 800 via an interface such as a universal serial bus (USB) for example.

The data I/F unit 809 is a device for inputting data from the outside of the computer 800. Specific examples of the data I/F unit 809 include a drive device for reading data stored in various storage media and the like. The data I/F unit 809 may be provided outside the computer 800. In such a case, the data I/F unit 809 is connected to the computer 800 via an interface such as a USB for example.

The communication I/F unit 811 is a device for performing data communication with an external device of the computer 800 using a wire or wirelessly using the Internet N. The communication I/F unit 811 may be provided outside the computer 800. In this case, the communication I/F unit 811 is connected to the computer 800 via an interface such as a USB for example.

The display device 813 is a device that displays various types of data and information. Specific examples of the display device 813 include a liquid crystal display, an organic electro-luminescence (EL) display, a display of a wearable device, and the like. The display device 813 may be provided outside the computer 800. In this case, the display device 813 is connected to the computer 800 via, for example, a display cable and the like. When a touch panel is used as the input I/F unit 807, the display device 813 can be configured integrally with the input I/F unit 807.

The above-described embodiment is an example for describing the present invention, and the present invention is not intended to be limited to the embodiment. The present invention can be variously modified without departing from the gist thereof. Furthermore, those skilled in the art can adopt embodiments in which each element described below is replaced with an equivalent element, and such embodiments are also included in the scope of the present invention.

### Modification Examples

The present invention has been described based on the above embodiment, but the following cases are also included in the present invention.

### Modification Example 1

At least part of each configuration in the information processing device 200 according to the above-described embodiment may be included in the measurement device 300. For example, the function of the information processing device 200 of detecting a crop in an image, that is, the function implemented by the detection unit 212a may be the function of the measurement device 300. In this case, the information processing device 200 may acquire information indicating the result of the detection from the measurement device 300 and execute processing such as estimation of the second absolute position of a crop.

Aspects of the present embodiment include the following disclosures.

### Supplementary Note 1

An information processing device (200), including:
a position acquisition unit (211a) configured to acquire first absolute position information indicating a first absolute position of an imaging device (311) configured to capture an image of one or more crops in a specific region of a farm field;
an image acquisition unit (211b) configured to acquire the image captured by the imaging device (311);
an identification unit (212) configured to identify an in-image position in the image of each of the one or more crops displayed on the image based on the image;
an inclination acquisition unit (211c) configured to acquire inclination information indicating an inclination of the imaging device measured by a measurement unit (300);
a correction unit (212b) configured to correct the in-image position based on the inclination information; and
an estimation unit (213) configured to estimate a second absolute position of each of the one or more crops displayed on the image based on the first absolute position information and the in-image position.

### Supplementary Note 2

An information processing method, including:
by a computer (200),
acquiring first absolute position information indicating a first absolute position of an imaging device (311) configured to capture an image of one or more crops in a specific region of a farm field;
acquiring the image captured by the imaging device (311);
identifying an in-image position in the image of each of the one or more crops displayed on the image based on the image;
acquiring inclination information indicating inclination of the imaging device measured by a measurement unit (300);
correcting the in-image position based on the inclination information; and
estimating a second absolute position of each of the one or more crops displayed on the image based on the first absolute position information and the in-image position.

### Supplementary Note 3

A program causing a computer (200) to execute:
a position acquisition function (211a) configured to acquire first absolute position information indicating an absolute position of an imaging device (311) configured to capture an image of one or more crops in a specific region of a farm field;
an image acquisition function (211b) configured to acquire the image captured by the imaging device;
an identification function (212) configured to identify an in-image position in the image of each of the one or more crops displayed on the image based on the image;
an inclination acquisition function (211c) configured to acquire inclination information indicating inclination of the imaging device measured by a measurement unit;
a correction function (212b) configured to correct the in-image position based on the inclination information; and
an estimation function (213) configured to estimate a second absolute position of each of the one or more crops displayed on the image based on the first absolute position information and the in-image position.

### REFERENCE SIGNS LIST

1 Smart agriculture system, 200 Information processing device, 210 Control unit, 211 Acquisition unit, 212 Identification unit, 213 Estimation unit, 214 Integration unit, 215 Calculation unit, 216 Distance calculation unit, 217 Resolution calculation unit, 220 Communication unit, 230 Input/output unit, 240 Storage unit, 300 Measurement device, 310 Mobile sensor, 311 Image sensor

## Claims

1. An information processing device, comprising:
a position acquisition unit configured to acquire first absolute position information indicating a first absolute position of an imaging device configured to capture an image of one or more crops in a specific region of a farm field;
an image acquisition unit configured to acquire the image captured by the imaging device;
an inclination acquisition unit configured to acquire inclination information indicating an inclination of the imaging device measured by a measurement unit;
an identification unit configured to identify an in-image position in the image of each of the one or more crops displayed on the image based on the image and the inclination information; and
an estimation unit configured to estimate a second absolute position of each of the one or more crops displayed on the image based on the first absolute position information and the in-image position.

2. The information processing device according to claim 1, comprising
a calculation unit configured to calculate the number of the one or more crops in the specific region based on the second absolute position.

3. The information processing device according to claim 2, wherein
the image includes a plurality of images,
the information processing device further comprises an integration unit configured to integrate the crops displayed on a different image of the images based on the second absolute position of each of the crops displayed on the plurality of images, and
the calculation unit calculates the number of the one or more crops in the specific region based on a result of the integration.

4. The information processing device according to claim 1 or 2, wherein
the image includes a plurality of images,
the information processing device further comprises an integration unit configured to integrate the crops displayed on a different image of the images based on the second absolute position of each of the crops displayed on the plurality of images, and
the integration unit stores, in a storage unit, identification information for identifying each of the crops integrated and the second absolute position of each of the crops in association with each other.

5. The information processing device according to claim 1 or 2, wherein
the image includes a plurality of images,
the information processing device further comprises an integration unit configured to integrate the crops displayed on a different image of the images based on the second absolute position of each of the crops displayed on the plurality of images, and
the integration unit stores, in a storage unit, identification information for identifying each of the crops integrated and size information indicating a size of each of the crops in association with each other.

6. The information processing device according to claim 1 or 2, wherein
the inclination information includes an angle of the inclination,
the information processing device further comprises a distance acquisition unit configured to acquire distance information indicating a distance between the imaging device and the one or more crops,
the identification unit comprises a correction unit,
the correction unit corrects the in-image position based on the angle of the inclination and the distance indicated in the distance information, and
the estimation unit estimates the second absolute position based on the first absolute position information and the in-image position corrected.

7. The information processing device according to claim 1 or 2, further comprising:
a size acquisition unit configured to acquire size information indicating a size of each of the crops; and
a distance calculation unit configured to calculate a distance between each of the one or more crops and the imaging device based on the size information and the image, wherein
the identification unit comprises a correction unit,
the correction unit corrects the in-image position based on an angle of the inclination and the distance calculated, and
the estimation unit estimates the second absolute position based on the first absolute position information and the in-image position corrected.

8. The information processing device according to claim 7, further comprising:
a device information acquisition unit configured to acquire device information related to the imaging device; and
a resolution calculation unit configured to calculate a resolution of the image based on the distance and the device information.

9. An information processing method, comprising:
by a computer,
acquiring first absolute position information indicating a first absolute position of an imaging device configured to capture an image of one or more crops in a specific region of a farm field;
acquiring the image captured by the imaging device;
acquiring inclination information indicating an inclination of the imaging device measured by a measurement unit;
identifying an in-image position in the image of each of the one or more crops displayed on the image based on the image and the inclination information; and
estimating a second absolute position of each of the one or more crops displayed on the image based on the first absolute position information and the in-image position.

10. A program causing a computer to execute:
a position acquisition function of acquiring first absolute position information indicating an absolute position of an imaging device configured to capture an image of one or more crops in a specific region of a farm field;
an image acquisition function of acquiring the image captured by the imaging device;
an inclination acquisition function of acquiring inclination information indicating an inclination of the imaging device measured by a measurement unit;
an identification function of identifying an in-image position in the image of each of the one or more crops displayed on the image based on the image and the inclination information; and
an estimation function of estimating a second absolute position of each of the one or more crops displayed on the image based on the first absolute position information and the in-image position.
